# EUROPÄISCHE PATENTSCHRIFT

(11) **EP 1 345 683 B1**
(45) Veröffentlichungstag und Bekanntmachung des Hinweises auf die Patenterteilung: **14.03.2007**
(21) Anmeldenummer: 01995692.9
(22) Anmeldetag: 18.12.2001
(51) Int. Cl.: B01J 13/16

(54) **VERKAPSELUNG VON EMULSIONEN**
ENCAPSULATION OF EMULSIONS
ENCAPSULATION D'EMULSIONS

(30) Priorität: 27.12.2000 DE 10064878
(43) Veröffentlichungstag der Anmeldung: 24.09.2003
(73) Patentinhaber: Cognis IP Management GmbH, 40589 Düsseldorf (DE)
(72) Erfinder: HERAULT, David, 77133 Féricy (FR)
(86) Internationale Anmeldenummer: PCT/EP2001/014920
(87) Internationale Veröffentlichungsnummer: WO 2002/051536

(56) Entgegenhaltungen:
- WO-A-02/02222
- FR-A- 2 590 185
- US-A- 4 439 510
- PATENT ABSTRACTS OF JAPAN vol. 2000, no. 07, 29. September 2000 (2000-09-29) & JP 2000 117095 A (OJI PAPER CO LTD), 25. April 2000 (2000-04-25)

## Beschreibung

### Gebiet der Erfindung

Die Erfindung befindet sich auf dem Gebiet der Emulsionen und betrifft verkapselte Emulsionen, ein Verfahren zu deren Herstellung unter Einsatz von verschiedenen polymerisierbaren Emulgatoren und Co-Monomeren sowie deren Verwendung in oberflächenaktiven Zubereitungen.

### Stand der Technik

Unter dem Begriff "Mikrokapsel" werden sphärische Aggregate mit einem Durchmesser im Bereich von etwa 10 nm bis etwa 5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen.

Die Freisetzung der Wirkstoffe aus den Mikrokapseln erfolgt üblicherweise während der Anwendung der enthaltenden Zubereitungen durch Zerstörung der Hülle infolge mechanischer, thermischer, chemischer oder enzymatischer Einwirkung. Besonders nachteilig ist, dass die bekannten Mikrokapseln die kontrollierte Freisetzung der Wirkstoffe aus ihrem Innern nicht oder nur in unzureichendem Maße zulassen und die Kapseln eine ungenügende Stabilität in Gegenwart von Tensiden, zumal anionischen Tensiden aufweisen. Ein weiterer Nachteil ist, dass große Menge an Wand- bzw. Kernmaterial für die Verkapselung notwendig sind. Es werden damit Komponenten, wie beispielsweise Polymere, in die Formulierung eingebracht die für die Anwendung keinerlei Vorteile bringen.

In diesem Zusammenhang sei auf die internationale Patentanmeldung WO 02/02222 hingewiesen, aus der ein Verfahren zur Verkapselung bzw. zum Einschluss einer W/O bzw. O/W-Emulsion bekannt ist.

Die Aufgabe der vorliegenden Erfindung hat darin bestanden, ein Verfahren zur Verfügung zu stellen, welches die Verkapselung von Emulsionen erlaubt und die oben beschriebenen Nachteile beseitigt.

### Beschreibung der Erfindung

Gegenstand der Erfindung ist ein Verfahren zur Verkapselung von Emulsionen, welches sich dadurch auszeichnet, dass man aus
(a) einem polymerisierbaren Emulgator, der einen Methacryl-, Aryl-, Vinyl- oder Allylrest enthält,
(b) mindestens einem polyfunktionellen Co-Monomer,
(c) mindestens einer hydrophilen Flüssigkeit und
(d) mindestens einer hydrophoben Flüssigkeit
eine W/O- oder O/W Emulsion herstellt, anschließend diese Mischung unter Erhalt einer Matrix polymerisiert und die hydrophilen und hydrophoben Flüssigkeiten von der Matrix eingeschlossen werden.

Ein weiterer Gegenstand der Erfindung betrifft verkapselte Emulsionen, die dadurch erhältlich sind, dass man aus
(a) einem polymerisierbaren Emulgator, der einen Methacryl-, Aryl-, Vinyl- oder Allylrest enthält,
(b) mindestens einem polyfunktionellen Co-Monomer,
(c) mindestens einer hydrophilen Flüssigkeit,
(d) mindestens einer hydrophoben Flüssigkeit,
(e) gegebenenfalls monofunktionelle Co-Monomere und
(f) gegebenenfalls Wirkstoffe
eine W/O- oder O/W Emulsion herstellt, anschließend diese Mischung unter Erhalt einer Matrix polymerisiert und die hydrophilen und hydrophoben Flüssigkeiten von der Matrix eingeschlossen werden.

Überraschenderweise wurde gefunden, dass man O/W- oder W/O-Emulsionen, welche die genannten polymerisierbaren Emulgatoren und polyfunktionellen Co-Monomeren enthalten, direkt in der Lösung verkapseln kann. Dieses ist besonders vorteilhaft, da so der Zusatz von Polymeren für die Verkapselung überflüssig wird, und somit keine für die Eigenschaften der Emulsionen unnötigen Komponenten zugesetzt werden müssen. Die Erfindung schließt die Erkenntnis mit ein, dass durch die Verwendung der speziellen polymerisierbaren Emulgatoren in Kombination mit polyfunktionellen Co-Monomeren Mikrokapseln mit hoher Wandstabilität entstehen, ohne dass große Mengen an Wand- bzw. Kernmaterial für die Verkapselung notwendig sind. Aufgrund der hohen Stabilität der Kapseln - ebenfalls bei Anwesenheit von Aniontensiden - eignen sich derartige verkapselte Emulsionen hervorragend für die Stabilisierung sowie der kontrollierten Freisetzung und Langzeitwirkung von Wirkstoffen.

### Polymerisierbare Emulgatoren

Die im Sinne der Erfindung in Frage kommenden polymerisierbaren Emulgatoren (Komponente a) sind aus einem lipophilen und einem hydrophilen Teil aufgebaut und enthalten eine polymerisierbare Gruppe. Diese polymerisierbare Gruppe ist kovalent oder ionisch an den lipophilen oder hydrophilen Teil gebunden oder befindet sich zwischen dem lipophilen und hydrophilen Teil. Als polymerisierbare Gruppen sind im Sinne der Erfindung Methacryl-, Aryl-, Vinyl-, oder Allylreste und vorzugsweise Methacryl- und Acrylreste zu verstehen.

Es kommen vorzugsweise folgende polymerisierbare Emulgatoren in Frage:
- Nichtionische Tenside mit OH-Funktionalität, verestert mit Acryl- und/oder Methacrylsäure, beispielsweise Lauroxypolyethylenglykolmonoacrylat (Blemmer^{®} ALE 800 der Firma NOF Corporation)
   Typische Beispiele für nichtionische Tenside mit OH-Funktionalität sind Fettalkoholpolyglykolether, Alkylphenolpolyglykolether, Fettsäurepolyglykolester, Fettsäureamidpolyglykolether, Fettaminpolyglykolether, alkoxylierte Triglyceride, Mischether bzw. Mischformale, gegebenenfalls partiell oxidierte Alk(en)yloligoglykoside bzw. Glucoronsäurederivate, Fettsäure-N-alkylglucamide, Proteinhydrolysate (insbesondere pflanzliche Produkte auf Weizenbasis), Polyolfettsäureester, Zuckerester, Sorbitanester, Polysorbate und Aminoxide. Sofern die nichtionischen Tenside Polyglykoletherketten enthalten, können diese eine konventionelle, vorzugsweise jedoch eine eingeengte Homologenverteilung aufweisen.
- Sojaöl, Leinöl, Sonnenblumenöl, ungesättigte Fettalkohole (vorzugsweise Oleyl- oder I-sooleylalkohol) Ölsäuremono-, -di- und -triglyceride sowie deren Mischungen, welche mit 1 bis 50 Mol Ethylenoxid und/oder Propylenoxid alkoxyliert **[J. Surfactants Deterg, (1999), 2(3), 373-381]**, dann epoxidiert **[Yuki Gosei Kagaku Kyokai Shi (1975), 33(7)**, **580f]** und anschließend mit Acrylsäure und/oder Methacrylsäure ringgeöffnet werden, wie beispielsweise Ölsäurediglycerid+20EO mit Acrylsäure geöffnet werden.
- anionische Tenside, welche mit einer Säure, vorzugsweise Salzsäure angesäuert werden und anschliessend mit einem basischen bifunktionellen Monomer, vorzugsweise Diallyamin, neutralisiert werden, wie z.B. Dodecylsulfat mit Salzsäure angesäuert und Diallylamin neutralisiert. Unter einem basischen bifunktiionellen Monomer werden Verbindungen verstanden, die zwei polyfunktionelle Gruppen, d.h. Allyl-, Viny-, Acryl- oder Methacrylgruppen, ausweisen und basisch sind.
   Typische Beispiele für anionische Tenside sind Seifen, Alkylbenzolsulfonate, Alkansulfonate, Olefinsulfonate, Alkylethersulfonate, Glycerinethersulfonate, α-Methylestersulfonate, Sulfofettsäuren, Alkylsulfate, Fettalkoholethersulfate, Glycerinethersulfate, Fettsäureethersulfate, Hydroxymischethersulfate, Monoglycerid(ether)sulfate, Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren, wie beispielsweise Acyllactylate, Acyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate. Sofern die anionischen Tenside Polyglykoletherketten enthalten, können diese eine konventionelle, vorzugsweise jedoch eine eingeengte Homologenverteilung aufweisen.

Im erfindungsgemäßen Verfahren werden die ausgewählten polymerisierbaren Emulgatoren in Mengen von 0,1 bis 50, vorzugsweise 2 bis 20 und insbesondere 3 bis 5 und 12 bis 20 Gew.-% - bezogen auf die Endzusammensetzung der Emulsion - eingesetzt.

### Polyfunktionelle Co-Monomere

Im erfindungsgemäßen Verfahren kommen als polyfunktionelle Co-Monomere (Komponente b) Verbindungen in Frage, die mindestens zwei polymerisierbare funktionelle Gruppen, wie z.B. Acryl-, Methacryl-, Allyl- oder Vinylgruppen, enthalten, wie beispielsweise 1,6-Hexandioldiacrylate, 1,12-Dodecandioldimethacrylate, Dipropylenglykoldiacrylate, Triethylenglykoldimethacrylate, Trimethylolpropantriacrylate, Trimethylolpropanethoxylattriacrylate, Glycerylpropoxylattriacrylate, Diallylamine, N,N'-Diallylweinsäurediamide, Divinylbenzole sowie analoge Verbindungen eingesetzt. Vorzugsweise werden Acrylate und/oder Methacrylate und insbesondere 1,12-Dodecandioldimethacrylat oder Triethylenglykoldimethacrylat eingesetzt.

Im erfindungsgemäßen Verfahren werden die polyfunktionellen Co-Monomere in Mengen von 0,01 bis 20, vorzugsweise 0,1 bis 10 und insbesondere 0,5 bis 5 Gew.-% - bezogen auf die Endzusammensetzung der Emulsion - eingesetzt.

### Monofunktionelle Co-Monomere

Als fakultative Komponente (e) können zu dem erfindungsgemäßen Verfahren monofunktionelle Co-Monomere zugesetzt werden. Unter monofunktionellen Co-Monomeren werden Verbindungen verstanden, die eine polymerisierbare funktionelle Gruppe enthalten, wie z.B. eine Acryl-, Methacryl-, Allyl- oder Vinylgruppe, wie beispielsweise Acryl- Methacryl-, Itaconic-, Citraconic, Malein-, Fumar- oder Vinylbenzolsäure sowie deren Amide oder Nitrile; aromatische Vinylverbindungen, wie z.B. Styrol, Methylsterol, Ethylsterol und Chlorstyrol; Vinylverbindungen, wie z.B. Vinylchlorid und -acetat und Vinylidenverbindungen; wie z.B. Vinylidenchlorid. Vorzugsweise werden als monofunktionelle Co-Monomere Acryl- und Methacrylsäure sowie deren Ester und Nitrile und Vinylidenverbindungen eingesetzt. Diese Co-Monomere gewährleisten eine bessere Polymerisation und führen zur Stabilisierung der Kapseln durch positive oder negative Ladungen. Im erfindungsgemäßen Verfahren werden die polyfunktionellen Co-Monomere in Mengen von 0,01 bis 20, vorzugsweise 0,1 bis 10 und insbesondere 0,5 bis 5 Gew.-% - bezogen auf die Endzusammensetzung der Emulsion - eingesetzt.

### Hydrophile Flüssigkeiten

Als hydrophile Flüssigkeiten (Komponente c) kommen im erfindungsgemäßen Verfahren beispielsweise Wasser, Glycerincarbonat, Polyole, vorzugsweise Glycerin oder Glykole, Dimethylformamid, Dimethylacetamid, Dimethylsulfoxid, N-Methylpyrrolidon, Glykolether, kurzkettigen Alkohole (C1 bis C8), Triacetin oder deren Gemische in Frage. Vorzugsweise wird hierbei als hydrophile Flüssigkeit Wasser eingesetzt. Polyole, die im Sinne der Erfindung in Betracht kommen, besitzen vorzugsweise 2 bis 15 Kohlenstoffatome und mindestens zwei Hydroxylgruppen. Die Polyole können noch weitere funktionelle Gruppen, insbesondere Aminogruppen, enthalten bzw. mit Stickstoff modifiziert sein. Typische Beispiele sind
- Glycerin;
- Alkylenglykole, wie beispielsweise Ethylenglykol, Diethylenglykol, Propylenglykol, Butylenglykol, Hexylenglykol sowie Polyethylenglykole mit einem durchschnittlichen Molekulargewicht von 100 bis 1.000 Dalton;
- technische Oligoglyceringemische mit einem Eigenkondensationsgrad von 1,5 bis 10 wie etwa technische Diglyceringemische mit einem Diglyceringehalt von 40 bis 50 Gew.-%;
- Methyolverbindungen, wie insbesondere Trimethylolethan, Trimethylolpropan, Trimethylolbutan, Pentaerythrit und Dipentaerythrit;
- Niedrigalkylglucoside, insbesondere solche, mit 1 bis 8 Kohlenstoffen im Alkylrest, wie beispielsweise Methyl- und Butylglucosid;
- Zuckeralkohole mit 5 bis 12 Kohlenstoffatomen, wie beispielsweise Sorbit oder Mannit,
- Zucker mit 5 bis 12 Kohlenstoffatomen, wie beispielsweise Glucose oder Saccharose;
- Aminozucker, wie beispielsweise Glucamin;
- Dialkoholamine, wie Diethanolamin oder 2-Amino-1,3-propandiol.

Vorzugsweise werden als Polyole Glycerin, Diglycerin, Trimethylolpropan, Pentaerythrit, Sorbit, Propylenglykol, Butylenglykol, Hexylenglykol sowie Polyethylenglykole mit einem durchschnittlichen Molekulargewicht im Bereich von 100 bis 1.000 Dalton und insbesondere Glycerin, Diglycerin, Trimethylolpropan, Pentaerythrit, Sorbit sowie deren Mischungen eingesetzt.

Im erfindungsgemäßen Verfahren werden die hydrophilen Flüssigkeiten in Mengen von 1 bis 99, vorzugsweise 5 bis 95 und insbesondere 10 bis 90 Gew.-% - bezogen auf die Endzusammensetzung der Emulsion - eingesetzt.

### Hydrophobe Flüssigkeiten

Als hydrophobe Flüssigkeiten (Komponente d) kommen alle dem Fachmann aus dem Stand der Technik bekannten aliphatische Lösungsmittel, aromatische Lösungsmittel, halogenierte aliphatische Lösungsmittel, halogenierte aromatische Lösungsmittel, Fettalkohole, Ölkörper, vorzugsweise Triglyceride, sowie deren Gemische in Frage. Beispielhaft seien hier einige in Frage kommende hydrophobe Flüssigkeiten genannt:

Höhere Alkohole (Octanole, Cyclohexanol), Ether u. Glykolether (Diethylether, Dibutylether, Anisol, Dioxan, Tetrahydrofuran, Mono-, Di-, Tri-, Polyethylenglykolether), Ketone (Aceton, Butanon, Cyclohexanon), Ester (Essigsäureester, Glykolester), Amide u.a. Stickstoff-Verbindungen (Dimethylformamid, Pyridin, N-Methylpyrrolidon, Acetonitril), SchwefelVerbindungen (Schwefelkohlenstoff, Sulfolan), Nitro-Verbindungen (Nitrobenzol), Halogenkohlenwasserstoffe (Dichlormethan, Chloroform, Tetrachlormethan, Tri-, Tetrachlorethen, Ethylenchlorid, Chlorfluorkohlenstoffe), Kohlenwasserstoffe (Benzine, Petrolether, Cyclohexan, Methylcyclohexan, Dekalin, Terpen-Lösungsmittel, Benzol, Toluol, Xylole). In vielen Fällen verwendet man (auch aus Wirtschaßlichkeitsgründen) nicht die reinen Lösungsmittel, sondern Gemische, die die Lösungseigenschaften vereinigen, oder man greift zu Lösungsvermittlem.

Unter Fettalkoholen sind primäre aliphatische Alkohole der Formel (**I**) zu verstehen,

**R¹OH** **(I)**

in der R¹ für einen aliphatischen, linearen oder verzweigten Kohlenwasserstoffrest mit 6 bis 22 Kohlenstoffatomen und 0 und/oder 1, 2 oder 3 Doppelbindungen steht. Typische Beispiele sind Capronalkohol, Caprylalkohol, 2-Ethylhexylalkohol, Caprinalkohol, Laurylalkohol, I-sotridecylalkohol, Myristylalkohol, Cetylalkohol, Palmoleylalkohol, Stearylalkohol, Isostearylalkohol, Oleylalkohol, Elaidylalkohol, Petroselinylalkohol, Linolylalkohol, Linolenylalkohol, Elaeostearylalkohol, Arachylalkohol, Gadoleylalkohol, Behenylalkohol, Erucylalkohol und Brassidylalkohol sowie deren technische Mischungen, die z.B. bei der Hochdruckhydrierung von technischen Methylestern auf Basis von Fetten und Ölen oder Aldehyden aus der Roelen'-schen Oxosynthese sowie als Monomerfraktion bei der Dimerisierung von ungesättigten Fettalkoholen anfallen. Bevorzugt sind technische Fettalkohole mit 12 bis 18 Kohlenstoffatomen, wie beispielsweise Kokos-, Palm-, Palmkern- oder Talgfettalkohol.

Als Ölkörper kommen beispielsweise Guerbetalkohole auf Basis von Fettalkoholen mit 6 bis 18, vorzugsweise 8 bis 10 Kohlenstoffatomen, Ester von linearen C₆-C₂₂-Fettsäuren mit linearen oder verzweigten C₆-C₂₂-Fettalkoholen bzw. Ester von verzweigten C₆-C₁₃-Carbonsäuren mit linearen oder verzweigten C₆-C₂₂-Fettalkoholen, wie z.B. Myristylmyristat, Myristylpalmitat, Myristylstearat, Myristylisostearat, Myristyloleat, Myristylbehenat, Myristylerucat, Cetylmyristat, Cetylpalmitat, Cetylstearat, Cetylisostearat, Cetyloleat, Cetylbehenat, Cetylerucat, Stearylmyristat, Stearylpalmitat, Stearylstearat, Stearylisostearat, Stearyloleat, Stearylbehenat, Stearylerucat, Isostearylmyristat, Isostearylpalmitat, Isostearylstearat, Isostearylisostearat, Isostearyloleat, Isostearylbehenat, Isostearyloleat, Oleylmyristat, Oleylpalmitat, Oleylstearat, Oleylisostearat, Oleyloleat, Oleylbehenat, Oleylerucat, Behenylmyristat, Behenylpalmitat, Behenylstearat, Behenylisostearat, Behenyloleat, Behenylbehenat, Behenylerucat, Erucylmyristat, Erucylpalmitat, Erucylstearat, Erucylisostearat, Erucyloleat, Erucylbehenat und Erucylerucat. Daneben eignen sich Ester von linearen C₆-C₂₂-Fettsäuren mit verzweigten Alkoholen, insbesondere 2-Ethylhexanol, Ester von C₁₈-C₃₈-Alkylhydroxycarbonsäuren mit linearen oder verzweigten C₆-C₂₂-Fettalkoholen, insbesondere Dioctyl Malate, Ester von linearen und/oder verzweigten Fettsäuren mit mehrwertigen Alkoholen (wie z.B. Propylenglykol, Dimerdiol oder Trimertriol) und/oder Guerbetalkoholen, Triglyceride auf Basis C₆-C₁₀-Fettsäuren, flüssige Mono-/Di-/Triglyceridmischungen auf Basis von C₆-C₁₈-Fettsäuren, Ester von C₆-C₂₂-Fettalkoholen und/oder Guerbetalkoholen mit aromatischen Carbonsäuren, insbesondere Benzoesäure, Ester von C₂-C₁₂-Dicarbonsäuren mit linearen oder verzweigten Alkoholen mit 1 bis 22 Kohlenstoffatomen oder Polyolen mit 2 bis 10 Kohlenstoffatomen und 2 bis 6 Hydroxylgruppen, pflanzliche Öle, verzweigte primäre Alkohole, substituierte Cyclohexane, lineare und verzweigte C₆-C₂₂-Fettalkoholcarbonate, wie z.B. Dicaprylyl Carbonate (Cetiol® CC), Guerbetcarbonate auf Basis von Fettalkoholen mit 6 bis 18, vorzugsweise 8 bis 10 C Atomen, Ester der Benzoesäure mit linearen und/oder verzweigten C₆-C₂₂-Alkoholen (z.B. Finsolv® TN), lineare oder verzweigte, symmetrische oder unsymmetrische Dialkylether mit 6 bis 22 Kohlenstoffatomen pro Alkylgruppe, wie z.B. Dicaprylyl Ether (Cetiol® OE), Ringöffnungsprodukte von epoxidierten Fettsäureestern mit Polyolen, Silikonöle (Cyclomethicone, Siliciummethicontypen u.a.) und/oder aliphatische bzw. naphthenische Kohlenwasserstoffe, wie z.B. wie Squalan, Squalen oder Dialkylcyclohexane in Betracht.

Vorzugsweise werden als hydrophobe Flüssigkeiten Paraffine, Petrolether, Terpene und Ölkörper (vorzugsweise Isopropylmyristat) eingesetzt. Im erfindungsgemäßen Verfahren werden die hydrophoben Flüssigkeiten in Mengen von 1 bis 99, vorzugsweise 5 bis 95 und insbesondere 10 bis 90 Gew.-% - bezogen auf die Endzusammensetzung der Emulsion - eingesetzt.

### Wirkstoffe

Dem erfindungsgemäßen Verfahren können ferner als weitere Komponente (f) Wirkstoffe zugesetzt werden. Als Wirkstoffe sind gemeint alle Substanzen bei denen mindestens einer der folgenden Effekte für die gewerbliche Anwendung vorteilhaft sein kann:
- kontrollierte Freisetzung (verzögert bzw. lang anhaltend), z. B. eines Riechstoffes;
- Änderung der physikalischen Eigenschaften, wie z. B. feine Verteilung, höhere scheinbare Dichte, Fließfähigkeit;
- Schutz gegen Umwelteinflüsse, z. B. einer Hydrolyse oder oxidativer Abbau:

- Verhinderung der Verschlechterung der Fließfähigkeit z. B. einer hygroskopische Substanz;
- Reduzierung der Gefährdungspotential bei toxischen Substanzen;
- Veränderung von Geschmack, Geruch und Farbe;
- Maskierung der chemische Reaktivität;
- Trennung von nicht kompatiblen Komponenten in Formulierungen.

Beispielweise werden kosmetische Wirkstoffe eingesetzt, wie sie in **New Cosmetic Science, T. Mitsui, 1997, Elsevier, S. 148-164,** definiert sind. Vorzugsweise kommen als Wirkstoffe Tocopherol, Tocopherolacetat, Tocopherolpalmitat, Ascorbinsäure, Desoxyribonucleinsäure, Retinol, Bisabolol, Allantoin, Phytantriol, Panthenol, AHA-Säuren, Aminosäuren, Ceramide, Pseudoceramide, essentielle Öle, Pflanzenextrakte und Vitaminkomplexe in Frage.

Weiterhin kommen als Wirkstoffe je nach Anwendungsgebiet folgende Verbindungen in Frage:
- Stoffe, die insbesondere Holz und Holzwerkstoffe, Kunststoffe, Textilien flammfest machen (flammhemmend ausrüsten) sollen (Flammschutzmittel), z. B. Chlorparaffine oder Hexabrombenzol. Ziel: Verringerung der Reizwirkung dieser Stoffe auf Haut und Schleimhäute, Freigabe im Fall eines Brandes durch Kapselnöffnung infolge der Hitze.
- Härter bzw. Monomere und/oder reaktive Oligomere aus Zweikomponentenklebstoffen, z.B. Amine. Zweikomponentenklebstoffe ist eine Bezeichnung für chemische abbindende Klebstoffe, bei denen Monomere und/oder reaktive Oligomere einerseits und Härter andererseits als separate Komponenten vorliegen, die erst kurz vor der Anwendung vom Benutzer zusammengemischt werden. Beispiel hierfür sind Reaktionsklebstoffe auf Basis von Epoxiden und aminischen Härtern. Zweikomponentenklebstoffe sind aber auch Systemen aus Abmischungen von polymerisierbaren Komponenten und inaktiviertem, unter Anwender.-Bedingungen aber aktivierbarem, z.B. durch Wärme, Härter. Beispiele. für derartige Systeme sind u.a. flüssige Epoxidharze, in denen eingekapselte Amine dispergiert sind.
- Aromen, Treibmittel für Backwaren, Gärungsmittel, Öle und Fette für die Nahrungsmittelindustrie. Freisetzung durch Hitze, Druck. Effekt: z. B. lang anhaltender Geschmack bei einer Kaugummi.
- Futtermittel bzw. Futtermittelzusätze, wie z. B. Vitamine, ungesättigte Pflanzenfette. Effekt: Schutz dieser Stoffe vor Verdauung bzw. oxidativen Abbau.
- Aufheller, Bleichmittel, Riechstoffe oder Enzyme für Haushaltswaschmittel. Effekt: Lösung von Unverträglichkeit Probleme zweier Komponenten einer Waschmittel (z. B. Enzyme und Bleichmittel).
- Düngemittel, Saatgut, Insektizide, Herbizide, fungizide für die Agrarindustrie. z.B. die Verkapselung des Insektizids Methylparathion erhöht die Persistenz und reduziert die Toxizität.
- Pharmazeutische Wirkstoffe. Durch langsame Freigabe des Medikaments aus der Mikrokapsel werden eine Depotwirkung erzielt und Überdosen sofort nach der Einnahme verhindert.

Im erfindungsgemäßen Verfahren werden die Wirkstoffe in Mengen von 0 bis 50, vorzugsweise 0,5 bis 45 und insbesondere 1 bis 5 oder 30 bis 40 Gew.-% - bezogen auf die Endzusammensetzung der Emulsion - eingesetzt.

### Polymerisation

Die Polymerisation erfolgt zwischen 10 und 100, vorzugsweise 15 und 50 °C und insbesondere Raumtemperatur, mittels UV-Bestrahlung und/oder Initiatoren. Der Zerfall der Initiatoren kann auch durch einen Redoxprozess, beispielsweise mit Laurylperoxid und FeSO₄, eingeleitet werden. Je nach System wird bevorzugt einen lipophilen bzw. einen hydrophilen Initiator verwendet [vgl. **Comprehensive Polymer Sci. 3, 98-146].**

### Gewerbliche Anwendbarkeit

Das erfindungsgemäße Verfahren basiert auf die Multifunktionalität der polymerisierbaren Komponenten (Emulgator und Co-Monomer) und nutzt deren Selbstorganisation an der Grenze der lipophilen/hydrophilen Flüssigkeit in einer Emulsion. Das Verfahren benötigt somit nur wenig Wandmaterial zur Erhalt der Matrix (Core-Shell Kapseln) und die erhaltenen Mikrokapsel-Dispersion beinhaltet keinen oder kaum nicht-einpolymerisierte bzw. nichteingekapselte Komponenten. Die Dispersion kann je nach Partikelgröße bzw. Anwendungen filtriert bzw. als solche in oberflächenaktiven Zubereitungen eingesetzt werden.

Zu einer Mischung aus 1 bis 99, vorzugsweise 5 bis 95 und insbesondere 10 bis 90 Gew.-% hydrophiler Flüssigkeit und 1 bis 99, vorzugsweise 5 bis 95 und insbesondere 10 bis 90 Gew.-% lipophiler Flüssigkeit werden ein oder mehrere polymerisierbare Emulgatoren (0,1 bis 50, vorzugsweise 2 bis 20 und insbesondere 3 bis 5 und 12 bis 20 Gew.-%), ein oder mehrere polyfunktionelle Co-Monomere (0,01 bis 20, vorzugsweise 0,1 bis 10 und insbesondere 0,5 bis 5 Gew.-%), gegebenenfalls monofunktionelle Co-Monomere (0,01 bis 20, vorzugsweise 0,1 bis 10 und insbesondere 0,5 bis 5 Gew.-%), das Initiatorsystem (0 bis 15, vorzugsweise 0,1 bis 3 Gew.-%) und gegebenenfalls die zu verkapselnden biogenen Wirkstoffe (0 bis 50, vorzugsweise 0,5 bis 45 und insbesondere 1 bis 5 oder 30 bis 40 Gew.-%) zugegeben und eine Emulsion hergestellt. Die eingesetzten polymerisierbaren Emulgatoren stabilisieren das System lang genug um den Polymerisationsprozess zu ermöglichen. Alternativ kann das Initiatorsystem ganz oder teilweise nachträglich zugegeben werden. Je nach Initiatorsystem werden nach 1 bis 24 und vorzugsweise nach 5 bis 10-stündiger UV-Bestrahlung und/oder Temperieren bzw. einfach nur Rühren die hergestellten Mikrokapseln als eine Suspension bzw. nach Filtration eingesetzt.

Durch das erfindungsgemäße Verfahren werden verkapselte Emulsionen, die gegebenenfalls als weitere Komponente (e) Wirkstoffe, enthalten, Tröpfchen bzw. Kapseln mit einer Partikelgröße von 70 nm bis 5 µm, vorzugsweise 150 nm bis 2 µm und insbesondere 300 nm bis 0,5 µm erhalten. Die Bestimmung der Partikelgrößen erfolgte durch Photoelektronenkorrelationsspektroskopie mittels eines Coulter N4 Plus Submicron Particle Sizer der Firma Coulter.

Darüber hinaus können die über das Verfahren hergestellten verkapselten Emulsionen in oberflächenaktiven Zubereitungen, wie beispielsweise Wasch- Spül- und Reinigungsmitteln sowie kosmetischen und/oder pharmazeutische Zubereitungen verwendet werden, welche als weitere Hilfs- und Zusatzstoffe milde Tenside, Perlglanzwachse, Konsistenzgeber, Verdickungsmittel, Überfettungsmittel, Stabilisatoren, Siliconverbindungen, Fette, Wachse, Lecithine, Phospholipide, Antioxidantien, Deodorantien, Antitranspirantien, Antischuppenmittel, Quellmittel, Insektenrepellentien, Selbstbräuner, Tyrosininhibitoren (Depigmentierungsmittel), Hydrotrope, Solubilisatoren, Konservierungsmittel, Parfümöle, Farbstoffe und dergleichen enthalten können. Als kosmetische und/oder pharmazeutische Zubereitungen kommen beispielsweise Haarshampoos, Haarlotionen, Schaumbäder, Duschbäder, Cremes, Gele, Lotionen, alkoholische und wässrig/alkoholische Lösungen, Emulsionen, Wachs/ Fett-Massen, Stiftpräparaten, Pudern oder Salben in Frage.

Wie unter dem Kapitel "Wirkstoffe" beschrieben wurde können die verkapselten Emulsionen ebenfalls - je nachdem welche Verbindungen verkapselt -in den dort beschrieben Gebieten eingesetzt werden [vgl. **Microencapsulation., 6. Kapitel: Uses, Ullmann's Encyclopedia of Industrial Chemistry, 5. Aufl., Bd. A16, 1990, Seite 585-587].**

### Tenside

Als oberflächenaktive Stoffe können anionische nichtionische, kationische und/oder amphotere Tenside enthalten sein, deren Anteil an den Mitteln üblicherweise bei etwa 1 bis 70, vorzugsweise 5 bis 50 und insbesondere 10 bis 30 Gew.-% beträgt. Typische Beispiele für nichtionische Tenside sind Fettalkoholpolyglykolether, Alkylphenolpolyglykolether, Fettsäurepolyglykolester, Fettsäureamidpolyglykolether, Fettaminpolyglykolether, alkoxylierte Triglyceride, Mischether bzw. Mischformale, gegebenenfalls partiell oxidierte Alk(en)yloligoglykoside bzw. Glucoronsäurederivate, Fettsäure-N-alkylglucamide, Proteinhydrolysate (insbesondere pflanzliche Produkte auf Weizenbasis), Polyolfettsäureester, Zuckerester, Sorbitanester, Polysorbate und Aminoxide. Sofern die nichtionischen Tenside Polyglykoletherketten enthalten, können diese eine konventionelle, vorzugsweise jedoch eine eingeengte Homologenverteilung aufweisen. Typische Beispiele für kationische Tenside sind quartäre Ammoniumverbindungen, wie beispielsweise das Dimethyldistearylammoniumchlorid, und Esterquats, insbesondere quaternierte Fettsäuretrialkanolaminestersalze. Typische Beispiele für amphotere bzw. zwitterionische Tenside sind Alkylbetaine, Alkylamidobetaine, Aminopropionate, Aminoglycinate, Imidazoliniumbetaine und Sulfobetaine. Bei den genannten Tensiden handelt es sich ausschließlich um bekannte Verbindungen. Hinsichtlich Struktur und Herstellung dieser Stoffe sei auf einschlägige Übersichtsarbeiten beispielsweise **J.Falbe (ed.), "Surfactants in Consumer Products", Springer Verlag, Berlin, 1987, S. 54-124 oder J.Falbe (ed.), "Katalysatoren, Tenside und Mineralöladditive", Thieme Verlag, Stuttgart, 1978, S. 123-217** verwiesen. Typische Beispiele für besonders geeignete milde, d.h. besonders hautverträgliche Tenside sind Fettalkoholpolyglykolethersulfate, Monoglyceridsulfate, Mono- und/oder Dialkylsulfosuccinate, Fettsäureisethionate, Fettsäuresarcosinate, Fettsäuretauride, Fettsäureglutamate, α-Olefinsulfonate, Ethercarbonsäuren, Alkyloligoglucoside, Fettsäureglucamide, Alkylamidobetaine, Amphoacetale und/oder Proteinfettsäurekondensate, letztere vorzugsweise auf Basis von Weizenproteinen.

### Wachse

Als Wachse kommen u.a. natürliche Wachse, wie z.B. Candelillawachs, Carnaubawachs, Japanwachs, Espartograswachs, Korkwachs, Guarumawachs, Reiskeimölwachs, Zuckerrohrwachs, Ouricurywachs, Montanwachs, Bienenwachs, Schellackwachs, Walrat, Lanolin (Wollwachs), Bürzelfett, Ceresin, Ozokerit (Erdwachs), Petrolatum, Paraffinwachse, Mikrowachse; chemisch modifizierte Wachse (Hartwachse), wie z.B. Montanesterwachse, Sasolwachse, hydrierte Jojobawachse sowie synthetische Wachse, wie z.B. Polyalkylenwachse und Polyethylenglykolwachse in Frage. Neben den Fetten kommen als Zusatzstoffe auch fettähnliche Substanzen, wie Lecithine und Phospholipide in Frage. Unter der Bezeichnung Lecithine versteht der Fachmann diejenigen Glycero-Phospholipide, die sich aus Fettsäuren, Glycerin, Phosphorsäure und Cholin durch Veresterung bilden. Lecithine werden in der Fachwelt daher auch häufig als Phosphatidylcholine (PC) bezeichnet und folgen der allgemeinen Formel, 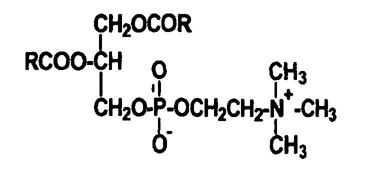 wobei R typischerweise für lineare aliphatische Kohlenwasserstoffreste mit 15 bis 17 Kohlenstoffatomen und bis zu 4 cis-Doppelbindungen steht. Als Beispiele für natürliche Lecithine seien die Kephaline genannt, die auch als Phosphatidsäuren bezeichnet werden und Derivate der 1,2-Diacyl-sn-glycerin-3-phosphorsäuren darstellen. Dem gegenüber versteht man unter Phospholipiden gewöhnlich Mono- und vorzugsweise Diester der Phosphorsäure mit Glycerin (Glycerinphosphate), die allgemein zu den Fetten gerechnet werden. Daneben kommen auch Sphingosine bzw. Sphingolipide in Frage.

### Perlglanzwachse

Als Perlglanzwachse kommen beispielsweise in Frage: Alkylenglykolester, speziell Ethylenglykoldistearat; Fettsäurealkanolamide, speziell Kokosfettsäurediethanolamid; Partialglyceride, speziell Stearinsäuremonoglycerid; Ester von mehrwertigen, gegebenenfalls hydroxysubstituierte Carbonsäuren mit Fettalkoholen mit 6 bis 22 Kohlenstoffatomen, speziell langkettige Ester der Weinsäure; Fettstoffe, wie beispielsweise Fettalkohole, Fettketone, Fettaldehyde, Fettether und Fettcarbonate, die in Summe mindestens 24 Kohlenstoffatome aufweisen, speziell Lauron und Distearylether; Fettsäuren wie Stearinsäure, Hydroxystearinsäure oder Behensäure, Ringöffnungsprodukte von Olefinepoxiden mit 12 bis 22 Kohlenstoffatomen mit Fettalkoholen mit 12 bis 22 Kohlenstoffatomen und/oder Polyolen mit 2 bis 15 Kohlenstoffatomen und 2 bis 10 Hydroxylgruppen sowie deren Mischungen.

### Konsistenzgeber und Verdickungsmittel

Als Konsistenzgeber kommen in erster Linie Fettalkohole oder Hydroxyfettalkohole mit 12 bis 22 und vorzugsweise 16 bis 18 Kohlenstoffatomen und daneben Partialglyceride, Fettsäuren oder Hydroxyfettsäuren in Betracht. Bevorzugt ist eine Kombination dieser Stoffe mit Alkyloligoglucosiden und/oder Fettsäure-N-methylglucamiden gleicher Kettenlänge und/oder Polyglycerinpoly-12-hydroxystearaten. Geeignete Verdickungsmittel sind beispielsweise Aerosil-Typen (hydrophile Kieselsäuren), Polysaccharide, insbesondere Xanthan-Gum, Guar-Guar, Agar-Agar, Alginate und Tylosen, Carboxymethylcellulose und Hydroxyethylcellulose, ferner höhermolekulare Polyethylenglykolmono- und -diester von Fettsäuren, Polyacrylate, (z.B. Carbopole^{®} und Pemulen-Typen von Goodrich; Synthalene^{®} von Sigma; Keltrol-Typen von Kelco; Sepigel-Typen von Seppic; Salcare-Typen von Allied Colloids), Polyacrylamide, Polymere, Polyvinylalkohol und Polyvinylpyrrolidon, Tenside wie beispielsweise ethoxylierte Fettsäureglyceride, Ester von Fettsäuren mit Polyolen wie beispielsweise Pentaerythrit oder Trimethylolpropan, Fettalkoholethoxylate mit eingeengter Homologenverteilung oder Alkyloligoglucoside sowie Elektrolyte wie Kochsalz und Ammoniumchlorid.

### Überfettungsmittel

Als Überfettungsmittel können Substanzen wie beispielsweise Lanolin und Lecithin sowie polyethoxylierte oder acylierte Lanolin- und Lecithinderivate, Polyolfettsäureester, Monoglyceride und Fettsäurealkanolamide verwendet werden, wobei die letzteren gleichzeitig als Schaumstabilisatoren dienen.

### Stabilisatoren

Als Stabilisatoren können Metallsalze von Fettsäuren, wie z.B. Magnesium-, Aluminium- und/oder Zinkstearat bzw. -ricinoleat eingesetzt werden.

### Silikonverbindungen

Geeignete Silikonverbindungen sind beispielsweise Dimethylpolysiloxane, Methylphenylpolysiloxane, cyclische Silicone sowie amino-, fettsäure-, alkohol-, polyether-, epoxy-, fluor-, glykosid- und/oder alkylmodifizierte Siliconverbindungen, die bei Raumtemperatur sowohl flüssig als auch harzförmig vorliegen können. Weiterhin geeignet sind Simethicone, bei denen es sich um Mischungen aus Dimethiconen mit einer durchschnittlichen Kettenlänge von 200 bis 300 Dimethylsiloxan-Einheiten und hydrierten Silicaten handelt. Eine detaillierte Übersicht über geeignete flüchtige Silicone findet sich zudem von Todd et al. in **Cosm.Toil. 91, 27 (1976).**

### Antioxidantien

Es können auch Antioxidantien zugesetzt werden, die die photochemische Reaktionskette unterbrechen, welche ausgelöst wird, wenn UV-Strahlung in die Haut eindringt. Typische Beispiele hierfür sind Aminosäuren (z.B. Glycin, Histidin, Tyrosin, Tryptophan) und deren Derivate, Imidazole (z.B. Urocaninsäure) und deren Derivate, Peptide wie D,L-Carnosin, D-Carnosin, L-Carnosin und deren Derivate (z.B. Anserin), Carotinoide, Carotine (z.B. α-Carotin, β-Carotin, Lycopin) und deren Derivate, Chlorogensäure und deren Derivate, Liponsäure und deren Derivate (z.B. Dihydroliponsäure), Aurothioglucose, Propylthiouracil und andere Thiole (z.B. Thioredoxin, Glutathion, Cystein, Cystin, Cystamin und deren Glycosyl-, N-Acetyl-, Methyl-, Ethyl-, Propyl-, Amyl-, Butyl- und Lauryl-, Palmitoyl-, Oleyl-, γ-Linoleyl-, Cholesteryl- und Glycerylester) sowie deren Salze, Dilaurylthiodipropionat, Distearylthiodipropionat, Thiodipropionsäure und deren Derivate (Ester, Ether, Peptide, Lipide, Nukleotide, Nukleoside und Salze) sowie Sulfoximinverbindungen (z.B. Buthioninsulfoximine, Homocysteinsulfoximin, Butioninsulfone, Penta-, Hexa-, Heptathioninsulfoximin) in sehr geringen verträglichen Dosierungen (z.B. pmol bis µmol/kg), ferner (Metall)-Chelatoren (z.B. α-Hydroxyfettsäuren, Palmitinsäure, Phytinsäure, Lactoferrin), α-Hydroxysäuren (z.B. Citronensäure, Milchsäure, Äpfelsäure), Huminsäure, Gallensäure, Gallenextrakte, Bilirubin, Biliverdin, EDTA, EGTA und deren Derivate, ungesättigte Fettsäuren und deren Derivate (z.B. γ-Linolensäure, Linolsäure, Ölsäure), Folsäure und deren Derivate, Ubichinon und Ubichinol und deren Derivate, Vitamin C und Derivate (z.B. Ascorbylpalmitat, Mg-Ascorbylphosphat, Ascorbylacetat), Tocopherole und Derivate (z.B. Vitamin-E-acetat), Vitamin A und Derivate (Vitamin-A-palmitat) sowie Koniferylbenzoat des Benzoeharzes, Rutinsäure und deren Derivate, α-Glycosylrutin, Ferulasäure, Furfurylidenglucitol, Carnosin, Butylhydroxytoluol, Butylhydroxyanisol, Nordihydroguajakharzsäure, Nordihydroguajaretsäure, Trihydroxybutyrophenon, Harnsäure und deren Derivate, Mannose und deren Derivate, Superoxid-Dismutase, Zink und dessen Derivate (z.B. ZnSO₄) Selen und dessen Derivate (z.B. Selen-Methionin), Stilbene und deren Derivate (z.B. Stilbenoxid, trans-Stilbenoxid) und die erfindungsgemäß geeigneten Derivate (Salze, Ester, Ether, Zucker, Nukleotide, Nukleoside, Peptide und Lipide) dieser genannten Wirkstoffe.

### Quellmittel

Als Quellmittel für wäßrige Phasen können Montmorillonite, Clay Mineralstoffe, Pemulen sowie alkylmodifizierte Carbopoltypen (Goodrich) dienen. Weitere geeignete Polymere bzw. Quellmittel können der Übersicht von R.Lochhead in **Cosm.Toil. 108, 95 (1993)** entnommen werden.

### Selbstbräuner und Depigmentierungsmittel

Als Selbstbräuner eignet sich Dihydroxyaceton. Als Tyrosinhinbitoren, die die Bildung von Melanin verhindern und Anwendung in Depigmentierungsmitteln finden, kommen beispielsweise Arbutin, Kojisäure, Cumarinsäure und Ascorbinsäure (Vitamin C) in Frage.

### Hydrotrope

Zur Verbesserung des Fließverhaltens können ferner Hydrotrope, wie beispielsweise Ethanol, Isopropylalkohol, oder Polyole eingesetzt werden. Polyole, die hier in Betracht kommen, besitzen vorzugsweise 2 bis 15 Kohlenstoffatome und mindestens zwei Hydroxylgruppen. Die Polyole können noch weitere funktionelle Gruppen, insbesondere Aminogruppen, enthalten bzw. mit Stickstoff modifiziert sein. Typische Beispiele sind
- Glycerin;
- Alkylenglykole, wie beispielsweise Ethylenglykol, Diethylenglykol, Propylenglykol, Butylenglykol, Hexylenglykol sowie Polyethylenglykole mit einem durchschnittlichen Molekulargewicht von 100 bis 1.000 Dalton;
- technische Oligoglyceringemische mit einem Eigenkondensationsgrad von 1,5 bis 10 wie etwa technische Diglyceringemische mit einem Diglyceringehalt von 40 bis 50 Gew.-%;
- Methyolverbindungen, wie insbesondere Trimethylolethan, Trimethylolpropan, Trimethylolbutan, Pentaerythrit und Dipentaerythrit;
- Niedrigalkylglucoside, insbesondere solche mit 1 bis 8 Kohlenstoffen im Alkylrest, wie beispielsweise Methyl- und Butylglucosid;
- Zuckeralkohole mit 5 bis 12 Kohlenstoffatomen, wie beispielsweise Sorbit oder Mannit,
- Zucker mit 5 bis 12 Kohlenstoffatomen, wie beispielsweise Glucose oder Saccharose;
- Aminozucker, wie beispielsweise Glucamin;
- Dialkoholamine, wie Diethanolamin oder 2-Amino-1,3-propandiol.

### Konservierungsmittel

Als Konservierungsmittel eignen sich beispielsweise Phenoxyethanol, Formaldehydlösung, Parabene, Pentandiol oder Sorbinsäure sowie die in Anlage 6, Teil A und B der Kosmetikverordnung aufgeführten weiteren Stoffklassen.

### Parfümöle

Als Parfümöle seien genannt Gemische aus natürlichen und synthetischen Riechstoffen. Natürliche Riechstoffe sind Extrakte von Blüten (Lilie, Lavendel, Rosen, Jasmin, Neroli, Ylang-Ylang), Stengeln und Blättern (Geranium, Patchouli, Petitgrain), Früchten (Anis, Koriander, Kümmel, Wacholder), Fruchtschalen (Bergamotte, Zitrone, Orangen), Wurzeln (Macis, Angelica, Sellerie, Kardamon, Costus, Iris, Calmus), Hölzern (Pinien-, Sandel-, Guajak-, Zedern-, Rosenholz), Kräutern und Gräsern (Estragon, Lemongras, Salbei, Thymian), Nadeln und Zweigen (Fichte, Tanne, Kiefer, Latschen), Harzen und Balsamen (Galbanum, Elemi, Benzoe, Myrrhe, Olibanum, Opoponax). Weiterhin kommen tierische Rohstoffe in Frage, wie beispielsweise Zibet und Castoreum. Typische synthetische Riechstoffverbindungen sind Produkte vom Typ der Ester, Ether, Aldehyde, Ketone, Alkohole und Kohlenwasserstoffe. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether, zu den Aldehyden z.B. die linearen Alkanale mit 8 bis 18 Kohlenstoffatomen, Citral, Citronellal, Citronellyloxyacetaldehyd, Cyclamenaldehyd, Hydroxycitronellal, Lilial und Bourgeonal, zu den Ketonen z.B. die Jonone, α-Isomethylionon und Methylcedrylketon, zu den Alkoholen Anethol, Citronellol, Eugenol, Isoeugenol, Geraniol, Linalool, Phenylethylalkohol und Terpineol, zu den Kohlenwasserstoffen gehören hauptsächlich die Terpene und Balsame. Bevorzugt werden jedoch Mischungen verschiedener Riechstoffe verwendet, die gemeinsam eine ansprechende Duftnote erzeugen. Auch ätherische Öle geringerer Flüchtigkeit, die meist als Aromakomponenten verwendet werden, eignen sich als Parfümöle, z.B. Salbeiöl, Kamillenöl, Nelkenöl, Melissenöl, Minzenöl, Zimtblätteröl, Lindenblütenöl, Wacholderbeerenöl, Vetiveröl, Olibanöl, Galbanumöl, Labolanumöl und Lavandinöl. Vorzugsweise werden Bergamotteöl, Dihydromyrcenol, Lilial, Lyral, Citronellol, Phenylethylalkohol, α-Hexylzimtaldehyd, Geraniol, Benzylaceton, Cyclamenaldehyd, Linalool, Boisambrene Forte, Ambroxan, Indol, Hedione, Sandelice, Citronenöl, Mandarinenöl, Orangenöl, Allylamylglykolat, Cyclovertal, Lavandinöl, Muskateller Salbeiöl, β-Damascone, Geraniumöl Bourbon, Cyclohexylsalicylat, Vertofix Coeur, Iso-E-Super, Fixolide NP, Evernyl, Iraldein gamma, Phenylessigsäure, Geranylacetat, Benzylacetat, Rosenoxid, Romilllat, Irotyl und Floramat allein oder in Mischungen, eingesetzt.

### Farbstoffe

Als Farbstoffe können die für kosmetische Zwecke geeigneten und zugelassenen Substanzen verwendet werden, wie sie beispielsweise in der Publikation **"Kosmetische Färbemittel" der Farbstoffkommission der Deutschen Forschungsgemeinschaft, Verlag Chemie, Weinheim, 1984, S.81-106** zusammengestellt sind. Diese Farbstoffe werden üblicherweise in Konzentrationen von 0,001 bis 0,1 Gew.-%, bezogen auf die gesamte Mischung, eingesetzt.

Der Gesamtanteil der Hilfs- und Zusatzstoffe kann 1 bis 80, vorzugsweise 5 bis 50 und insbesondere 7 bis 10 Gew.-% - bezogen auf die Mittel - betragen. Die Herstellung der Mittel kann durch übliche Kalt - oder Heißemulgierungen oder aber nach dem PIT-Verfahren erfolgen.

### Beispiele

### Beispiel 1

### Umsetzung von Lauroxypolyethylenglykolmonoacrylat mit Triethylenglykoldimethacrylat

97 Teile Natriumchlorid Lösung (0.01 M), 97 Teile Tetradecan, 6 Teile Lauroxypolyethylenglykolmonoacrylat (Blemmer^{®} ALE 800, NOF Corporation), 6 Teile Triethylenglykoldimethacrylat und 0,4 Teile 2,2'-Azobis[2-methyl-N-(2-hydroxyethyl)propionamide] werden zusammen gegeben und unter Argon im Ultraturrax (T₂₅ von IKA Labortechnik, 11000 bis 15000 U) für circa eine Minute emulgiert. Nach 1 h UV-Bestrahlung (Osram Ultra-Vitalux 300 W) erhält man eine Kapselnsuspension.

### Beispiel 2

### Umsetzung von Lauroxypolyethylenglykolmonoacrylat mit Triethylenglykoldimethacrylat

97 Teile Kochsalzlösung (0.01 M), 97 Teile Tetradecan, 6 Teile Lauroxypolyethylenglykolmonoacrylat, 6 Teile Triethylenglykoldimethacrylat und 0,5 Teile Laurylperoxid werden zusammengegeben und unter Argon im Ultraturrax gemäß Beispiel 1 emulgiert. Nach 1 h UV-Bestrahlung (Osram Ultra-Vitalux 300 W) erhält man eine Kapselnsuspension.

### Beispiel 3

### Umsetzung von Lauroxypolyethylenglykolmonoacrylat mit Triethylenglykoldimethacrylat

60 Teile Kochsalzlösung (0.01 M), 0,9 Teile Lauroxypolyethylenglykolmonoacrylat, 0,9 Teile Triethylenglykoldimethacrylat und 0,06 Teile 2,2'-Azobis[2-methyl-N-(2-hydroxyethyl)propionamide] werden zusammengegeben. 2,5 h UV-Bestrahlung (Osram Ultra-Vitalux 300 W) unter Rühren führte zu einen leicht trüben Kapselnsuspension.

### Beispiel 4

### Umsetzung von Diallylammoniumdodecylsulfat mit Triethylenglykoldimethacrylat

60 Teile Kochsalzlösung (0.01 M), 0,9 Teile Diallylammoniumdodecylsulfat, 0,9 Teile Triethylenglykoldimethacrylat und 0,06 Teile 2,2'-Azobis[2-methyl-N-(2-hydroxyethyl)propionamide] werden zusammengegeben. 2.5 h UV-Bestrahlung (Osram Ultra-Vitalux 300 W) unter Rühren führte zu einen leicht trüben Kapselsuspension (Partikeldurchmesser nach Lichtstreuung Messungen: 50 bis 100 nm).

### Beispiel 5

### Umsetzung von Lauroxypolyethylenglykolmonoacrylat mit Triethylenglykoldimethacrylat

91 Teile Kochsalzlösung (0.01 M), 18 Teile Tetradecan, 1,5 Teile Lauroxypolyethylenglykolmonoacrylat, 1,5 Teile Triethylenglykoldimethacrylat, 0,1 Teile Laurylperoxid und 0,1 Teile FeSO₄ werden zusammengegeben und unter Argon im Ultraturrax gemäß Beispiel 1 emulgiert. Nach 18 h Rühren und Filtration erhält man 17.5 g Kapseln als Feststoff. Diese setzen Tetradecan beim Verreiben frei.

### Beispiel 6

### Umsetzung von Lauroxypolyethylenglykolmonoacrylat mit Triethylenglykoldimethacrylat

100 Teile Kochsalzlösung (0.01 M), 2 Teile Tetradecan, 0,12 Teile Lauroxypolyethylenglykolmonoacrylat, 0,12 Teile Triethylenglykoldimethacrylat, 0,01 Teile Laurylperoxid und 0,01 Teile FeSO₄ werden zusammengegeben und unter Argon im Ultraturrax gemäß Beispiel 1 emulgiert. Nach 18 h Rühren erhält man eine Kapselsuspension.

### Beispiel 7

### Umsetzung eines Ringöffnungsproduktes von epoxidiertem Ölsäurediglycerid+20 EO und Acrylsäure mit Dodecandiol-1,12-dimethacrylat

60 Teile Kochsalzlösung (0.01 M), 0,9 Teile eines Ringöfnungsproduktes von epoxidiertem Ölsäurediglycerid+20 mit Acrylsäure, 0,9 Teile Dodecandiol-1,12-dimethacrylat, 0,07 Teile Laurylperoxid und 0,07 Teile FeSO₄ werden zusammengegeben und unter Argon im Ultraturrax gemäß Beispiel 1 emulgiert. Nach 18 h Rühren erhält man eine Kapselnsuspension (Partikeldurchmesser nach Lichtstreuung Messungen: 200 bis 400 nm).

### Beispiel 8

### Umsetzung von Alkylallylsulfobernsteinsäure Natriumsalz mit Triethylenglykoldimethacrylat

60 Teile Kochsalzlösung (0.01 M), 12 Teile Tetradecan, 0,7 Teile Alkylallylsulfobernsteinsäure Natriumsalz (Trem^{®} LF 40, Cognis Corp.), 0,7 Teile Triethylenglykoldimethacrylat, 0,06 Teile Laurylperoxid und 0,06 Teile FeSO₄ werden zusammengegeben und unter Argon im Ultraturrax gemäß Beispiel 1 emulgiert. Nach 18 h Rühren erhält man eine Kapselnsuspension.

### Beispiel 9

### Umsetzung von Alkylallylsulfobemsteinsäure Natriumsalz mit Triethylenglykoldimethacrylat

100 Teile Kochsalzlösung (0.01 M), 2 Teile Tetradecan, 0,12 Teile Alkylallylsulfobemsteinsäure Natriumsalz, 0,12 Teile Triethylenglykoldimethacrylat, 0,01 Teile Laurylperoxid und 0,01 Teile FeSO₄ werden zusammengegeben und unter Argon im Ultraturrax gemäß Beispiel 1 emulgiert. Nach 18 h Rühren erhält man eine Kapselnsuspension.

### Beispiel 10

### Riechstoffverkapselung

100 Teile Kochsalzlösung (0.01 M), 2 Teile Tetradecan, 2 Tropfen Eukaliptol, 0,12 Teile Lauroxypolyethylenglykolmonoacrylat, 0,12 Teile Triethylenglykoldimethacrylat, 0,01 Teile Laurylperoxidund 0,01 Teile FeSO₄ werden zusammengegeben und unter Argon im Ultraturrax gemäß Beispiel 1 emulgiert. Nach 18 h Rühren erhält man eine Kapselnsuspension. Als Vergleichprobe wird eine Emulsion ohne Laurylperoxid und FeSO₄ vorbereitet. Nach 4 Tagen (offen) ist der Geruch der Kapselnsuspension weniger intensiv, beim Verreiben jedoch deutlich intensiver.

### Beispiel 11

### Herstellung von Diallylammoniumdodecylsulfat

144 Teile Dodecylsulfat (Texapon^{®} K1296, Cognis Deutschland GmbH & Co. KG) gelöst in 144 Teile Wasser werden mit 49,5 Teile konzentrierter Salzsäure protoniert und mit 48,5 Teile Diallylamin neutralisiert.

### Beispiel 12

### Umsetzung eines Ringöffnungsproduktes von epoxidiertem Ölsäurediglycerid+20 EO und Acrylsäure mit Dodecandiol-1,12-dimethacrylat

439g Triolein (Edenor^{®} KL 20, Cognis Deutschland GmbH & Co. KG)) werden in Gegenwart von 23 g Glycerin und 8.8 g Kalilauge (50 %ig) mit 880 g Ethylenoxid g umgesetzt (Autoklav, 180 °C, 5 Bar). Das resultierende ethoxylierte statistisches Diglycerid (600 g) wird mit 224 g meta-Chlorperbenzoesäure in Chloroform in Gegenwart von 120 g Natriumhydrogencarbonat bei Raumtemperatur 2 h epoxidiert. Nach Auswaschen mit einer 10% Natriumsulfitlösung und einer gesättigten Natriumcarbonatlösung und Trocknen wird das Chloroform bei 40°C im Wasserstrahlvakuum abgezogen. Man erhält ein gelbes, klares, flüssiges Produkt (251 g). 50 g dieses epoxidierten Edenor^{®} KL 20-ethoxylates werden bei ca. 100 °C mit 4,9 g Acrylsäure, 0,05 g Triphenylphosphin und 0,11 g Hydroquinonmonomethylether versetzt und 6 h gerührt.

## Patentansprüche

1. Verfahren zur Verkapselung von Emulsionen, **dadurch gekennzeichnet, dass** man aus
(a) einem polymerisierbaren Emulgator, der einen Methacryl-, Aryl-, Vinyl- oder Allylrest enthält,
(b) mindestens einem polyfunktionellen Co-Monomer,
(c) mindestens einer hydrophilen Flüssigkeit und
(d) mindestens einer hydrophoben Flüssigkeit
eine W/O- oder O/W Emulsion herstellt, anschließend diese Mischung unter Erhalt einer Matrix polymerisiert und die hydrophilen und hydrophoben Flüssigkeiten von der Matrix eingeschlossen werden.

2. Verfahren nach Anspruch 1, **dadurch gekennzeichnet, dass** man einen polymerisierbaren Emulgator einsetzt, die ausgewählt sind aus der Gruppe, die gebildet wird von 1,6-Hexandioldiacrylat, 1,12-Dodecandioldimethacrylat, Dipropylenglykoldiacrylat, Triethylenglykoldimethacrylat, Trimethylolpropantriacrylate, Trimethylolpropanethoxylattriacrylat, Glycerylpropoxylattriacrylat, Diallylamin, N,N'-Diallylweinsäurediamid und Divinylbenzol.

3. Verfahren nach mindestens einem der Ansprüche 1 und/oder 2, **dadurch gekennzeichnet, dass** man hydrophile Flüssigkeiten einsetzt, die ausgewählt sind aus der Gruppe, die gebildet wird von Wasser, Glycerincarbonat, Polyolen, N,N-Dimethylformamid, Dimethylacetamid, Dimethylsulfoxid, N-Methylpyrrolidon, Glykolethern, kurzkettigen Alkoholen, Ketonen und Estern, Triacetin sowie deren Gemische.

4. Verfahren nach mindestens einem der Ansprüche 1 bis 3, **dadurch gekennzeichnet, dass** man hydrophobe Flüssigkeiten einsetzt, die aus gewählt sind aus der Gruppe, die gebildet wird von aliphatischen Lösungsmitteln, aromatischen Lösungsmitteln, halogenierten aliphatischen Lösungsmitteln, halogenierten aromatischen Lösungsmitteln, Fettalkoholen und Ölkörpern.

5. Verfahren nach mindestens einem der Ansprüche 1 bis 4, **dadurch gekennzeichnet, dass** die Polymerisation mittels Initiatoren oder UV-Bestrahlung erfolgt.

6. Verfahren nach mindestens einem der Ansprüche 1 bis 5, **dadurch gekennzeichnet, dass** man die W/O- oder O/W-Emulsion durch Zusatz von Wirkstoffen als weitere Komponente (f) herstellt.

7. Verfahren nach mindestens einem der Ansprüche 1 bis 6, **dadurch gekennzeichnet, dass** man Kapseln mit einer Partikelgröße von 70 nm bis 5 µm erhält.

8. Verkapselte Emulsionen, dadurch erhältlich, dass man aus
(a) einem polymerisierbaren Emulgator, der einen Methacryl-, Aryl-, Vinyl- oder Allylrest enthält,
(b) mindestens einem polyfunktionellen Co-Monomer,
(c) mindestens einer hydrophilen Flüssigkeit,
(d) mindestens einer hydrophoben Flüssigkeit,
(e) gegebenenfalls monofunktionelle Co-Monomere und
(f) gegebenenfalls Wirkstoffe
eine W/O- oder O/W Emulsion herstellt, anschließend diese Mischung unter Erhalt einer Matrix polymerisiert und die hydrophilen und hydrophoben Flüssigkeiten von der Matrix eingeschlossen werden.

9. Verwendung von verkapselten Emulsionen nach Anspruch 8 in oberflächenaktiven Zubereitungen.

## Claims

1. A process for the encapsulation of emulsions, **characterized in that** a w/o or o/w emulsion is prepared from
(a) a polymerizable emulsifier containing a methacryl, aryl, vinyl or allyl group,
(b) at least one polyfunctional comonomer,
(c) at least one hydrophilic liquid and
(d) at least one hydrophobic liquid,
the resulting mixture is polymerized to obtain a matrix and the hydrophilic and hydrophobic liquids are encapsulated by the matrix.

2. A process as claimed in claim 1, **characterized in that** a polymerizable emulsifier selected from the group consisting of 1,6-hexanediol diacrylate, 1,12-dodecanediol dimethacrylate, dipropylene glycol diacrylate, triethylene glycol dimethacrylate, trimethylolpropane triacrylate, trimethylolpropane ethoxylate triacrylate, glyceryl propoxylate triacrylate, diallylamine, N,N'-diallyltartaric acid diamide and divinylbenzene is used.

3. A process as claimed in at least one of claims 1 and/or 2, **characterized in that** hydrophilic liquids selected from the group consisting of water, glycerol carbonate, polyols, N,N-dimethyl formamide, dimethyl acetamide, dimethyl sulfoxide, N-methyl pyrrolidone, glycol ethers, short-chain alcohols, ketones and esters, triacetin and mixtures thereof are used.

4. A process as claimed in at least one of claims 1 to 3, **characterized in that** hydrophobic liquids selected from the group consisting of aliphatic solvents, aromatic solvents, halogenated aliphatic solvents, halogenated aromatic solvents, fatty alcohols and oil components are used.

5. A process as claimed in at least one of claims 1 to 4, **characterized in that** the polymerization is initiated by initiators or UV irradiation.

6. A process as claimed in at least one of claims 1 to 5, **characterized in that** the w/o or o/w emulsion is prepared by addition of active substances as an additional component (f).

7. A process as claimed in at least one of claims 1 to 6, **characterized in that** capsules with a particle size of 70 nm to 5 µm are obtained.

8. Encapsulated emulsions obtainable by preparing a w/o or o/w emulsion from
(a) a polymerizable emulsifier containing a methacryl, aryl, vinyl or allyl group,
(b) at least one polyfunctional copolymer,
(c) at least one hydrophilic liquid,
(d) at least one hydrophobic liquid,
(e) optionally monofunctional comonomers and
(f) optionally active substances, polymerizing the resulting mixture to obtain a matrix and encapsulating the hydrophilic and hydrophobic liquids in the matrix.

9. The use of the encapsulated emulsions claimed in claim 8 in surface-active preparations.

## Revendications

1. Procédé d'encapsulation d'émulsions,
**caractérisé en ce qu'**
on produit une émulsion E/H ou H/E à partir
a) d'un émulsionnant polymérisable contenant un reste méthacryle, aryle, vinyle ou allyle,
b) d'au moins un comonomère polyfonctionnel,
c) d'au moins un liquide hydrophile et
d) d'au moins un liquide hydrophobe,
puis on polymérise ce mélange pour obtenir une matrice dans laquelle sont renfermés les liquides hydrophiles et hydrophobes.

2. Procédé selon la revendication 1,
**caractérisé en ce qu'**
on utilise un émulsionnant polymérisable choisi dans le groupe constitué par le diacrylate de 1,6-hexanediol, le diméthacrylate de 1,12-dodécanediol, le diacrylate de dipropylène glycol, le diméthacrylate de triéthylène glycol, le triacrylate de triméthylolpropane, le triacrylate de triméthylolpropane éthoxylé, le triacrylate de glycéryle propoxylé, la diallylamine, le diamide d'acide N,N'-diallyltartrique et le divinylbenzène.

3. Procédé selon au moins l'une des revendications 1 et/ou 2,
**caractérisé en ce qu'**
on utilise des liquides hydrophiles choisis dans le groupe constitué par l'eau, le carbonate de glycérol, les polyols, le N,N-diméthylformamide, le diméthylacétamide, le diméthylsulfoxyde, la N-méthylpyrrolidone, les éthers de glycol, les alcools à chaîne courte, les cétones et les esters, la triacétine et leurs mélanges.

4. Procédé selon au moins l'une des revendications 1 à 3,
**caractérisé en ce qu'**
on utilise des liquides hydrophobes choisis dans le groupe constitué par les solvants aliphatiques, les solvants aromatiques, les solvants alipha tiques halogénés, les solvants aromatiques halogénés, les alcools gras et les corps gras.

5. Procédé selon au moins l'une des revendications 1 à 4,
**caractérisé en ce que**
l'on effectue la polymérisation au moyen d'amorceurs ou par rayonnement UV.

6. Procédé selon au moins l'une des revendications 1 à 5,
**caractérisé en ce qu'**
on produit l'émulsion E/H ou H/E en ajoutant des substances actives en tant que composants supplémentaires (f).

7. Procédé selon au moins l'une des revendications 1 à 6,
**caractérisé en ce qu'**
on obtient des capsules d'une taille allant de 70 nm à 5 µm.

8. Emulsions encapsulées que l'on peut obtenir par production d'une émulsion E/H ou H/E à partir
a) d'un émulsionnant polymérisable contenant un reste méthacryle, aryle, vinyle ou allyle,
b) d'au moins un comonomère polyfonctionnel,
c) d'au moins un liquide hydrophile,
d) d'au moins un liquide hydrophobe,
e) éventuellement, de comonomères monofonctionnels et
f) éventuellement, de substances actives,
puis par polymérisation de ce mélange pour obtenir une matrice dans laquelle sont renfermés les liquides hydrophiles et hydrophobes.

9. Utilisation d'émulsions encapsulées selon la revendication 8, dans des préparations tensioactives.
